# EUROPÄISCHE PATENTSCHRIFT

(11) **EP 1 428 340 B1**
(45) Veröffentlichungstag und Bekanntmachung des Hinweises auf die Patenterteilung: **28.05.2008**
(21) Anmeldenummer: 02774344.2
(22) Anmeldetag: 12.09.2002
(51) Int. Cl.: H04J 3/06

(54) **VERFAHREN UND VORRICHTUNG ZUR ERZEUGUNG VON PROGRAMMUNTERBRECHUNGEN BEI TEILNEHMERN EINES BUSSYSTEMS UND BUSSYSTEM**
METHOD AND DEVICE FOR PRODUCING PROGRAM INTERRUPTIONS IN SUBSCRIBERS TO A BUS SYSTEM, AND CORRESPONDING BUS SYSTEM
PROCEDE ET DISPOSITIF POUR PRODUIRE DES INTERRUPTIONS DE PROGRAMME AU NIVEAU D'UTILISATEURS D'UN SYSTEME DE BUS, ET SYSTEME DE BUS CORRESPONDANT

(30) Priorität: 13.09.2001 DE 10145219
(43) Veröffentlichungstag der Anmeldung: 16.06.2004
(73) Patentinhaber: ROBERT BOSCH GMBH, 70442 Stuttgart (DE)
(72) Erfinder: HARTWICH, Florian, 72762 Reutlingen (DE)
(86) Internationale Anmeldenummer: PCT/DE2002/003398
(87) Internationale Veröffentlichungsnummer: WO 2003/025686

(56) Entgegenhaltungen:
- EP-A- 0 886 412
- WO-A-00/44194
- WO-A-01/59965
- DE-A- 10 000 305
- LONN H ET AL: "Synchronisation in safety-critical distributed control systems" ALGORITHMS AND ARCHITECTURES FOR PARALLEL PROCESSING, 1995. ICAPP 95. IEEE FIRST ICAPP., IEEE FIRST INTERNATIONAL CONFERENCE ON BRISBANE, QLD., AUSTRALIA 19-21 APRIL 1995, NEW YORK, NY, USA,IEEE, US, 19. April 1995 (1995-04-19), Seiten 891-899, XP010149230 ISBN: 0-7803-2018-2
- ROSTAMZADEH B ET AL: "DACAPO: a distributed computer architecture for safety-critical control applications" INTELLIGENT VEHICLES '95 SYMPOSIUM., PROCEEDINGS OF THE DETROIT, MI, USA 25-26 SEPT. 1995, NEW YORK, NY, USA,IEEE, US, 25. September 1995 (1995-09-25), Seiten 376-381, XP010194147 ISBN: 0-7803-2983-X

## Beschreibung

Die Erfindung betrifft ein Verfahren und eine Vorrichtung zur Erzeugung wenigstens einer Programmunterbrechung bei wenigstens einem Teilnehmer eines Bussystems sowie ein entsprechendes Bussystem gemäß den unabhängigen Ansprüchen.

Die Vernetzung von Steuergeräten, Sensoren und Aktuatorik mit Hilfe eines Kommunikationssystems hat in den letzten Jahren beim Bau von modernen Kraftfahrzeugen oder auch im Maschinenbau, insbesondere im Werkzeugmaschinenbereich oder in der Automatisierung drastisch zugenommen. Synergieeffekte durch Verteilung von Funktionen auf mehrere Steuergeräte können dabei erzielt werden. Man spricht hierbei von verteilten Systemen. Die Kommunikation zwischen verschiedenen Stationen findet mehr und mehr über einen Bus statt. Der Kommunikationsverkehr auf dem Bus, Zugriffs- und Empfangsmechanismen sowie Fehlerbehandlung werden über ein Protokoll geregelt. Busspezifische Elemente von Steuergeräten, Sensoren und Aktuatorik, im Weiteren Teilnehmer genannt, in Verbindung mit der Kommunikationsverbindung werden im Weiteren als Bussystem bezeichnet.

Als Protokoll im Kfz-Bereich etabliert ist der CAN (Controller Area Network). Dieses ist ein ereignisgesteuertes Protokoll, d. h. Protokollaktivitäten wie das Senden einer Nachricht werden durch Ereignisse iniziiert, die ihren Ursprung außerhalb des Kommunikationssystems haben. Der eindeutige Zugang zum Kommunikationssystem bzw. Bussystem wird über eine prioritätsbasierte Bitarbitrierung gelöst. Eine Voraussetzung dafür ist, dass jeder Nachricht eine eindeutige Priorität zugewiesen ist. Das CAN-Protokoll ist sehr flexibel; ein Hinzufügen weiterer Knoten und Nachrichten ist damit problemlos möglich, so lange es noch freie Prioritäten (message identifier) gibt. Die Sammlung aller im Netzwerk zu sendenden Nachrichten mit Prioritäten und deren Senderknoten sowie möglicherweise Empfangsknoten werden in einer Liste, der sogenannten Kommunikationsmatrix abgelegt.

Ein alternativer Ansatz zur ereignisgesteuerten, spontanen Kommunikation ist der rein zeitgesteuerte Ansatz. Alle Kommunikationsaktivitäten auf dem Bus sind strikt periodisch. Protokollaktivitäten wie das Senden einer Nachricht werden nur durch das Fortschreiten einer für das gesamte Bussystem gültigen Zeit ausgelöst. Der Zugang zum Medium basiert auf der Zuteilung von Zeitbereichen, in denen ein Sender exklusives Senderecht hat. Das Protokoll ist vergleichsweise unflexibel; ein Hinzufügen von neuen Knoten ist nur dann möglich, wenn zuvor schon die entsprechenden Zeitbereiche freigelassen wurden. Dieser Umstand erzwingt, die Nachrichtenreihenfolge schon vor Inbetriebnahme festzusetzen. Es wird also ein Fahrplan erstellt, der den Anforderungen der Nachrichten bezüglich Wiederholrate, Redundanz, deadlines usw. genügen muss. Man spricht vom sogenannten "bus schedule". Die Positionierung der Nachrichten innerhalb der Sendeperioden muss auf die Applikationen abgestimmt werden, die die Nachrichteninhalte Applikationen abgestimmt werden, die die Nachrichteninhalte produzieren, um die Latenzen zwischen Applikation und Sendezeitpunkt minimal zu halten. Wenn diese Abstimmung nicht erfolgt, würde der Vorteil der zeitgesteuerten Übermittlung (minimale Latenz-Jitter beim Senden der Nachricht am Bus) zerstört. Es werden so hohe Anforderungen an die Planungstools gestellt.

Die EP 0 886 412 A1 zeigt eine Vorrichtung zur Überwachung der Nachrichtenperiodizität in einem Multiplexübertragungsnetzwerk des Typs CAN. Darin ist ein Speicher zur Speicherung von Nachrichten die einen Wert besitzen, welcher den Ablauf der Frist für den Empfang angibt und lokale Taktgebermittel vorgesehen. Die lokalen Taktmittel werden durch ein periodisches internes Signal synchronisiert und erzeugen ein lokales Zeitwertsignal. Damit wird eine fortlaufende Basiszeit offenbart, die mit einer im Bussystem verfügbaren Zeit synchronisiert werden kann. Die Verwendung einer globalen Zeit selbst, also einer Zeit die im gesamten Bussystem für alle Teilnehmer vorhanden ist, zur Bestimmung des Zeitpunktes einer Programmunterbrechung ist dabei nicht offenbart.

Der in den Patentanmeldungen DE 100 00 302 A1, DE 100 00 303 A1, DE 100 00 304 A1 und DE 100 00 305 A1 gezeigte Lösungsansatz des zeitgesteuerten CAN, dem so genannten TTCAN (Time Triggered Controller Area Network) genügt den oben skizzierten Forderungen nach zeitgesteuerter Kommunikation sowie den Forderungen nach einem gewissen Maß an Flexibilität. TTCAN erfüllt dies durch den Aufbau der Kommunikationsrunde (basic cycle) in so genannte exklusive Zeitfenster für periodische Nachrichten bestimmter Kommunikationsteilnehmer und in so genannte arbitrierende Zeitfenster für spontane Nachrichten mehrerer Kommunikationsteilnehmer.

Im Weiteren wird von einem TTCAN-Netzwerk als Bussystem ausgegangen, wobei dies nicht als einschränkend bezüglich des späteren Gegenstands der Erfindung zu verstehen ist. Vielmehr ist der Gegenstand der später erläuterten Erfindung auch bei weiteren, vergleichbaren Bussystemen einsetzbar.

Im Rahmen eines TTCAN-Netzwerks zeigt die DE 100 00 305 A1 ein Verfahren und eine Vorrichtung zum Austausch von Daten in Nachrichten zwischen wenigstens zwei Busteilnehmern, welche mittels eines Bussystems verbunden sind, wobei die die Daten enthaltenen Nachrichten durch die Teilnehmer über das Bussystem übertragen werden und jede Nachricht eine, die enthaltenen Daten charakterisierende Kennung enthält, wobei jeder Teilnehmer anhand der Kennung entscheidet, ob er die Teilnehmer wiederholt eine Referenznachricht in wenigstens einem vorgegebenen zeitlichen Abstand über den Bus überträgt und der zeitliche Abstand in Zeitfenster vorgebbarer Länge unterteilt wird, wobei die Nachrichten in den Zeitfenstern übertragen werden.

Innerhalb eines solchen Bussystems soll nun ein Verfahren und eine Vorrichtung angegeben werden, mit deren Hilfe eine Erzeugung einer Programmunterbrechung bei Teilnehmern und somit bei Steuergeräten, Sensorik und/oder Aktuatorik eines Bussystems einfach und auf das Bussystem synchronisiert möglich ist, ohne zusätzliche Belastung des jeweiligen Prozessors.

### Vorteile der Erfindung

Dies wird durch ein Verfahren und eine Vorrichtung sowie ein Bussystem zur Erzeugung wenigstens einer Programmunterbrechung bei wenigstens einem Teilnehmer des Bussystems erreicht, in dem wenigstens ein Teilnehmer einen vorgebbaren Zeitwert in wenigstens einen Speicher ablegt, wobei der Zeitwert mit wenigstens einer fortlaufenden Basiszeit verglichen wird und bei Übereinstimmung von Zeitwert und Basiszeit bzw. Zeitbasis die wenigstens eine Programmunterbrechung ausgelöst wird. Die fortlaufende Basiszeit ist für alle Teilnehmer des Bussystems vorhanden. Damit wird eine wird eine Programmunterbrechung, also ein sogenannter Interrupt zeitgesteuert ausgelöst, und

die Auslösung der Programmunterbrechung bzw. des Interrupt auf das Bussystem synchronisiert. Das bedeutet, dass als Zeitbasis bzw. Basiszeit eine im Bussystem selbst vorhandene Zeit verwendet wird.

Bei dem Bussytem handelt es sich dabei vorteilhafter Weise um ein TTCAN-Netzwerk bzw. TTCAN-System.

Zweckmäßiger Weise kann dabei die Basiszeit oder Zeitbasis einer der drei Zeiten bzw. Zeitbasen, der lokalen Zeit, der Zykluszeit oder der globalen Zeit des Bussytems entsprechen. Vorteilhafter Weise besitzt dabei jeder Teilnehmer eine lokale Zeit bzw. lokale Zeitbasis, wobei die Basiszeit oder Zeitbasis jeweils der lokalen Zeit des Teilnehmers entspricht. Ebenso von Vorteil ist, wenn die lokale Zeit eines Teilnehmers als globale Zeit für das Bussystem eingesetzt wird, der Teilnehmer sozusagen als Timemaster des Bussytems fungiert und die Basiszeit oder Zeitbasis dieser globalen Zeit entspricht.

Weiterhin ebenso vorteilhaft ist, dass im Bussystem Nachrichten derart übertragen werden, dass eine Referenznachricht eines Teilnehmers in einem vorgebbaren zeitlichen Abstand als Zykluszeit übertragen wird und der zeitliche Abstand in Zeitfenster vorgebbarer Länge unterteilt wird, in welchen die Nachrichten übertragen werden, wobei die Basiszeit der Zykluszeit, dem bus cycle, entspricht.

Vorteilhafter Weise werden dabei mehrere Zeitwerte in einem oder mehreren Speichern abgelegt, wobei jeder Zeitwert mit wenigstens einer Basiszeit verglichen wird, wodurch mehrere Programmunterbrechungen nacheinander oder gleichzeitig ausgelöst werden können.

Zweckmäßiger Weise ist der Zeitgeber der Basiszeit zum Vergleich mit dem wenigstens einen Zeitwert für das Bussystem fest vorgegeben oder veränderbar, insbesondere vorgebbar aus den mehreren verschiedenen Zeitgebern.

Zur Anzeige der Programmunterbrechung bzw. des Interrupts wird entweder ein allgemeines Interrupt-Signal, das im Bussystem ohnehin vorhanden ist, erzeugt, oder aber es wird zur Anzeige der Programmunterbrechung vorteilhafter Weise ein spezielles Interrupt-Signal im Bussytem erzeugt, so dass durch dieses Interrupt-Signal eine Unterscheidung zwischen zeitgesteuerter, eben erfinderungsgemäßer und nicht zeitgesteuerter, beispielsweise ereignisgesteuerter Programmunterbrechung ermöglicht wird.

Somit beschreibt die Erfindung ein allgemeines Verfahren, wie insbesondere ein autonomer TTCAN-Protokollcontroller einen zeitgesteuerten Interrupt generieren kann, der auf das insbesondere TTCAN-Netzwerk synchronisiert ist und der von dem Prozessor unabhängig ist.

So kann in vernetzten Steuergeräten, also in verteilten Systemen in der Automatisierung, im Kraftfahrzeug oder an anderen Stellen eine Programmunterbrechung bzw. ein Interrupt in mehreren Knoten des Netzwerks, insbesondere Teilnehmern im Bussystem zeitgleich generiert werden oder es kann ein Interrupt generiert werden, der nur von dem Takt des Kommunikationsnetzwerks, insbesondere TTCAN, abgeleitet wird und nicht vom Takt des Prozessors.

Somit erlaubt das in der Erfindung beschriebene Verfahren eine genauere Einstellung des Programmunterbrechungszeitpunkts und auch zeitgleiche Interrupt- bzw. Programmunterbrechungen in mehreren Knoten des Bussystems, insbesondere eines TTCAN-Netzwerks. Somit wird in einem insbesondere TTCAN-Netzwerk oder vergleichbarem Bussystem in verschiedenen Knoten und/oder Teilnehmern gleichzeitig ein Interrupt ausgelöst, ohne dass hierfür eine spezielle Nachricht gesendet werden muss. Es kann gerade im TTCAN-Netzwerk auch ein Interrupt ausgelöst werden, der auf die global time, also die globe Zeit des Bussystems bezogen ist, welche im TTCAN-Level 2 automatisch kallibriert wird, und zwar unabhängig vom Prozessortakt.

Weitere Vorteile und vorteilhafte Ausgestaltungen ergeben sich aus der Beschreibung sowie den Merkmalen der Ansprüche.

### Zeichnung

Die Erfindung wird im Weiteren anhand der in der Zeichnung dargestellten Figuren näher erläutert.

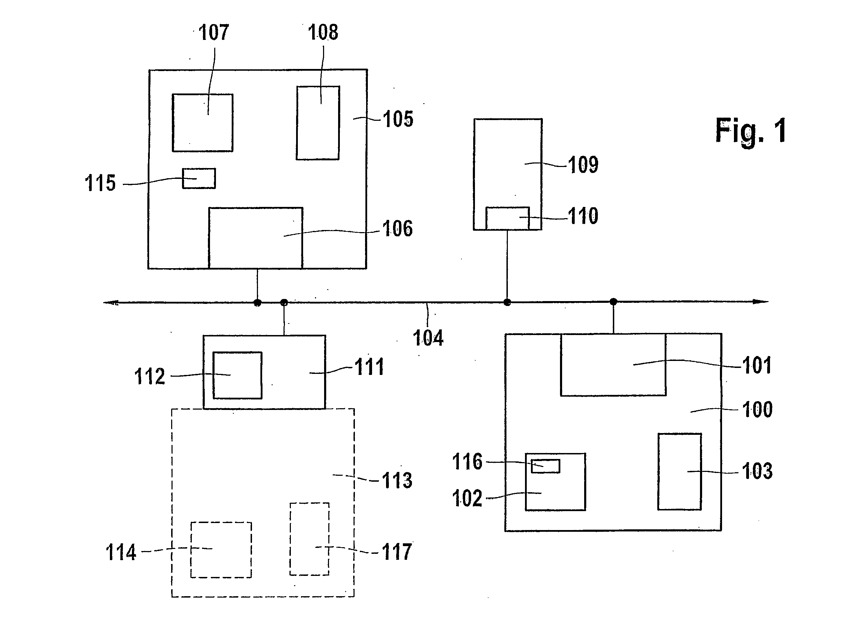

Dabei zeigt Figur 1 ein Bussystem mit den Zeitbasen bzw. Basiszeiten lokal time, cycle time und global time, eben als lokale Zeit, globale Zeit und Zykluszeit sowie verschiedene Möglichkeiten der Speicherung, insbesondere durch Register.

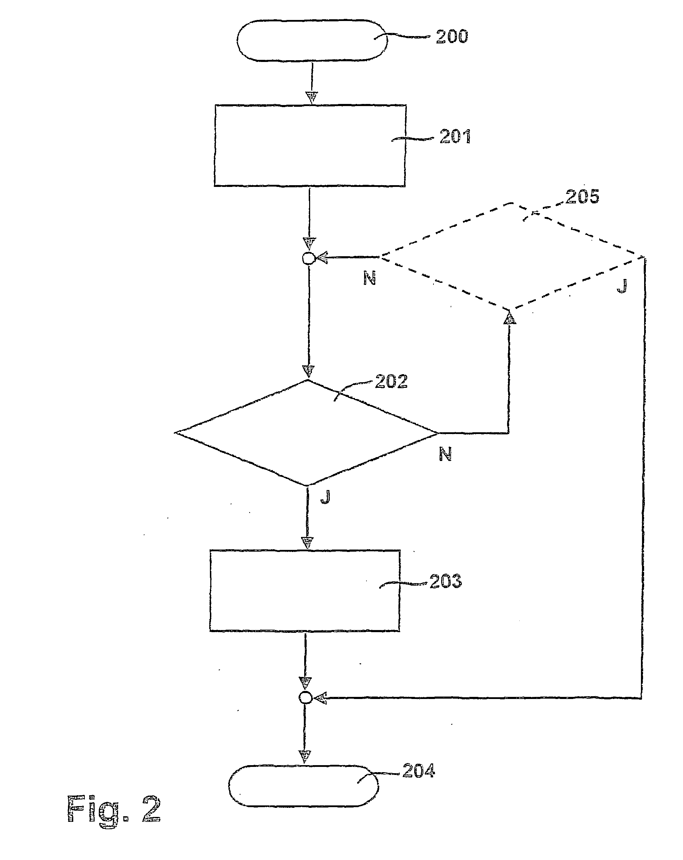

Figur 2 zeigt ein Flussdiagramm zur Darstellung des Verfahrens zur zeitgesteuerten Generierung einer Programmunterbrechung einschließlich möglicher Varianten im Ablauf.

### Beschreibung der Ausführungsbeispiele

Der Gegenstand der Erfindung beruht darauf, dass ein Zeitwert in einem Speicher bzw. einem Register vorgegeben wird, der mit einer Zeitbasis bzw. Basiszeit eines autonomen Protokollcontrollers des Bussystems, insbesondere TTCAN verglichen wird. Wenn die Zeitbasis den von dem Zeitwert im Register vorgegebenen Wert erreicht, wird der Interrupt bzw. die Programmunterbrechung ausgelöst. Dabei kann der Interrupt durch ein allgemeines Interruptsignal angezeigt werden oder durch ein spezielles Signal für den zeitgesteuerten Interrupt.

Dazu zeigt Figur 1 eine Kommunikationsverbindung 104 mit wenigstens zwei Teilnehmern 105 und 100. Als Teilnehmer werden dabei busspezifische Bausteine angenommen, welche zur Verbindung von Steuereinheiten, Sensorik und/oder Aktuatorik mit der Kommunikationsverbindung 104 bzw. dem Bussystem dienen. Dabei ist Teilnehmer 100 über einen Schnittstellenbaustein 101 mit der Kommunikationsverbindung bzw. dem Bus 104 verbunden. Der Teilnehmer 100 kann dabei ein ganzes Steuergerät ebenso wie eben erwähnt ein integrierter Schaltkreis zur Ankopplung an die Kommunikationsverbindung bzw, den Bus 104 sein, insbesondere ein Protokollcontroller. Neben dem Schnittstellenbaustein 101 ist beispielsweise eine verarbeitende Einheit, ein Prozessor 102 sowie eine Speichereinheit, insbesondere als Registerbank ausgeführt 103 enthalten. Teilnehmer 105, der wie Teilnehmer 100 ein einfacher Baustein als integrierter Schaltkreis, eben insbesondere ein Protokollcontroller im TTCAN-Netzwerk oder aber ein Steuergerät bzw. eine Recheneinheit ist.

Auch im IC 105 ist eine Schnittstelleneinheit bzw. ein Schnittstellenbaustein 106 eine verarbeitende Einheit, insbesondere ein Prozessor 107 sowie ein Speicher 108 enthalten. Die Zeitbasis bzw. Basiszeit der Teilnehmer 100 bzw. 105 wird durch eine optional synchronisierbaren Zeitgeber bestimmt. Dieser Zeitgeber kann, wie Baustein 115 frei im Teilnehmer selbst enthalten sein, oder in den Prozessor integriert, wie dies durch Baustein 116 und Prozessor 102 gezeigt ist. Ein solcher Zeitgeber 115 bzw. 116 gibt somit die lokale Zeit des jeweiligen Busteilnehmers 100 bzw. 105 vor. Als Zeitgeber können dabei Zähler bzw. Zählerschaltungen oder ähnliches eingesetzt sein. Ein solcher Zeitgeber 115 bzw. 116 gibt somit die lokale Zeit des jeweiligen Busteilnehmers 100 bzw. 105 als Zeitmaster oder Timemaster für das Bussystem vor. Es gilt somit die lokale Zeit, vorgegeben durch den Zeitmaster, also den entsprechenden Zeitgeber 115, als globale Zeit oder global time für das gesamte Bussystem und wird beispielsweise durch Referenznachrichten an die anderen Busteilnehmer übertragen, so dass die lokale Zeit des Zeitmasters als globale Zeit allen Busteilnehmern vorliegt.

Im speziellen Beispiel eines TTCAN-Systems basiert dieser im wesentlichen auf einer zeitgesteuerten, periodischen Kommunikation, die durch einen Zeitgeber, eben den Teilnehmer mit der Masterzeitfunktion mit Hilfe einer Zeitreferenznachricht oder Referenznachricht getaktet wird. Die Periode bis zur nächsten Referenznachricht wird dann als Basiszyklus oder basic cycle bezeichnet und beinhaltet eine Zykluszeit, die sogenannte cycletime. Dieser Basiszyklus unterteilt sich wiederum in N-Zeitfenster (N ∈ ∠), wobei jedes Zeitfenster das exklusive Senden einer periodischen Nachricht mit unterschiedlicher Länge erlaubt. Diese periodischen Nachrichten werden dann in einem TTCAN-Controller durch Verwendung von Zeitmarken, die dem Ablauf einer logischen und relativen Zeit gekoppelt sind, gesendet. TTCAN erlaubt aber auch die Berücksichtigung von freien Zeitfenstern, wobei diese Zeitfenster dann für sogenannte spontane Nachrichten im Rahmen einer Arbitrierung auf dem Bus genutzt und das Arbitrierungsschema entsprechend CAN genutzt wird. Die Sychronisation der lokalen Zeit der lokalen Zeit des Zeitmasters als globale Zeit mit den jeweils internen lokalen Zeiten der einzelnen Teilnehmer wird somit berücksichtigt und effizient umgesetzt. Somit sind im TTCAN-System drei Zeiten vorhanden, die globale Zeit, die lokale Zeit sowie die Zykluszeit. Bezogen auf die Levelebene im TTCAN stehen somit auf Level 1 zwei Zeitbasen zur Auswahl: Die lokale Zeit (local time) sowie die Zylkluszeit (cycle time) und in Level zwei kommt dann noch die globale Zeit (global time) hinzu.
Erfindungsgemäß können alle drei Zeitbasen bzw. Basiszeiten zum Vergleich mit Zeitwerten und somit zur Programmunterbrechungsauslösung eingesetzt werden.

Wie vorher genannt beruht das Verfahren bzw. die Vorrichtung sowie das entsprechende Bussystem erfindungsgemäß darauf, dass wenigstens ein Zeitwert zur Auslösung einer Programmunterbrechung in einen Speicher, insbesondere in ein Register als Zeitmarke bzw. Timemark kopiert wird. Dazu können die genannten Speicher 103 bzw. 108 ausführbar als Registerbänke verwendet werden oder optional ein separat an den Bus über Schnittstelleneinheit 110 angekoppelter Speicher 109 als zentrales Speichermedium zur Einspeicherung wenigstens eines oder mehrerer Zeitwerte, um diese Zeitwerte jeweils mit einer Basiszeit zu vergleichen zur Auslösung eines Interrupts.

Ebenfalls optional ist ein Schnittstellenbaustein 111 mit integrierter verarbeitender Einheit 112, der beispielsweise die Kommunikationsverbindung also den Bus 104 mit einem Steuergerät 113 mit integriertem weiteren Prozessor 114 verbindet. Die Funktionalität der Interruptauslösung durch Zeitvergleich kann in diesem speziellen Fall ebenfalls von der Schnittstellteneinheit 111 selbst wahrgenommen werden, die die Zeitwerte oder den Zeitwert entsprechend dem auszulösenden Interrupt bzw. der auszulösenden Programmunterbrechung entweder in einen internen Speicher des Steuergerätes z. B. Speicher 117 oder den zentralen Speicher 109 sowie auch einen nicht explizit dargestellten möglichen schnittstelleninternen Speicher ablegen.

Die Speicher können dabei eine interne Struktur aufweisen, so dass mehrere Speicherbereiche verwendet werden können oder auch eine Registerstruktur, so dass beispielsweise mehrere Register eingesetzt werden um parallel oder nacheinander mehrere Zeitwerte einzuspeichern und die Programmunterbrechungszeitpunkte festzulegen.

Für den Vergleich der einzelnen Zeitwerte mit jeweils einer Basiszeit kann die verwendete Basiszeit bzw. Zeitbasis beispielsweise aus einer der drei vorher genannten local time, cycle time oder global time zur Interruptauslösung gewählt werden oder einem bestimmten Speicher oder Registerbereichen fest zugeordnet sein sowie generell zur Interruptauslösung im gesamten Bussystem fest vorgegeben sein.

Anhand Figur 2 soll nochmals der konkrete Verfahrensablauf bis zur Interruptauslösung dargestellt werden. Dabei erfolgt im Block 200 der Start des Verfahrens. Im Block 201 wird der Zeitwert zur Programmunterbrechungsauslösung im jeweiligen Speicher abgelegt und eventuell sofern vorgesehen die entsprechende Zeitbasis zum Vergleich mit dem Zeitwert vorgegeben bzw. gewählt. In Abfrage zu 102 wird dann der Zeitwert mit der entsprechenden Zeitbasis verglichen. Dies kann beispielsweise dadurch erfolgen, dass der Zeitbasiswert mit dem Zeitwert oder Timemark TM verglichen wird. Zur Auswahl einer bestimmten Zeitbasis kann ein weiterer Wert TMC verwendet werden, der entsprechend cycle time, local time oder global time unterschiedliche Werte wie 1, 2 oder 3 aufweist. Bei Verwendungen eines solchen Indikators zur Auswahl der jeweiligen Zeitbasis kann dieser dann auch dazu verwendet werden, die Beschreibung des Zeitwertregisters also des Timemarkregisters nur dann zuzulassen, wenn TMC einen bestimmten Wert z. B. 0 aufweist.

Ist Zeitbasis und Zeitwert gleich, hat also die fortlaufende Zeitbasis den Zeitwert erreicht, wird im Block 203 ein Interrupt ausgelöst. Das Auslösen eines solchen Zeitinterrupts kann dabei beispielsweise durch Einschreiben eines weiteren Wertes eines Timemark-Interrupt-Wertes TMI in ein Interruptregister, insbesondere bei TTCAN das TT-Interruptvektorregister angezeigt werden. Je nach Wahl der Zeitbasis und nach Interruptumfang können so selektiv einzelne Teilnehmer mit einer Programmunterbrechnung beaufschlagt werden, bis hin zu allen Teilnehmern, also des gesamten Bussystems. Dies hängt nicht zuletzt auch von einer Zuordnung Zeitwert, Zeitbasis und Interrupt, auch darstellbar durch eine Speicherzuordnung, ab. So kann beispielsweise eine lokale Abspeicherung eines Zeitwertes im internen Speicher eines Teilnehmers auch einen lediglich lokalen Interrupt für diesen Teilnehmer zur Folge haben.

Bei Verwendung eines zentralen Speichers, beispielsweise Speicher 109, muß eine genaue Zuordnung von Zeitwert, Zeitbasis und Interruptumfang, also welche Teilnehmer wann einer Programmunterbrechnung unterzogen werden, vorgegeben werden. Solche Timemark-Interruptwerte oder TMI-Werte können auch Auswirkungen auf das gesamte Bussystem, in dem Fall TTCAN-Netzwerk haben. So kann beispielsweise mit einem Timemarkgap-Wert in einem TT-Gap-Controllregister festgelegt werden, ob mit aktiv werden eines Timemark-Interrupts, also eines eingeschriebenen TMI-Wertes die nächste Referenznachricht gestartet wird oder aber die TMI-Information automatisch mit jeder Referenznachricht zurückgesetzt wird.

Nach Auslösung des Interrupts in Block 203 und den eben beschriebenen Vorgängen gelangt man zu Block 204 dem Ende des Verfahrens. Wird allerdings im Vergleich im Block 202 festgestellt, dass Zeitwert und Zeitbasis noch nicht den gleichen Wert erreicht haben, die Zeitbasis also den Zeitwert also noch nicht erreicht hat, kann einerseits dieser Vergleich weiter abgefragt werden oder zum anderen optional eine Abbruchbedingung 205 zwischengeschaltet sein, um ein Aufhängen des Systems zu verhindern. Mit Hilfe einer solchen Abbruchbedingung kann dann insbesondere in einem Fehlerfall der Vergleich umgangen und direkt ohne Auslösen eines Interrupts das Verfahrensende erreicht werden, wobei sich dann noch eine bestimmte Fehlerreaktion oder Fehlerbehandlung anschließen kann.

Einzelne Interruptsignale können einzeln oder kombiniert angezeigt werden. Dadurch ist ein einfaches Verfahren zur Regenerierung von Programmunterbrechungen geschaffen, welches ohne Belastung des Prozessors unabhängig vom Prozessortakt und synchronisiert auf das Bussystem eine zeitgesteuerte Programmunterbrechung ermöglicht.

## Patentansprüche

1. Verfahren zur Erzeugung wenigstens einer Programmunterbrechung bei wenigstens einem Teilnehmer (105) eines Bussystems (104), wobei wenigstens ein Teilnehmer (105) einen vorgebbaren Zeitwert in wenigstens einen Speicher (108) ablegt, wobei der Zeitwert mit wenigstens einer fortlaufenden Basiszeit verglichen wird und bei Erreichen des Zeitwerts durch die fortlaufende Basiszeit die wenigstens eine Programmunterbrechung ausgelöst wird, **dadurch gekennzeichnet, dass** die fortlaufende Basiszeit eine im gesamten Bussystem (104) für alle Teilnehmer (100, 105) vorhandene Zeit ist, so dass der Zeitwert einen festgelegten Programmunterbrechungszeitpunkt bestimmt.

2. Verfahren nach Anspruch 1, **dadurch gekennzeichnet, dass** es sich bei dem Bussystem (104) um ein TTCAN-System handelt.

3. Verfahren nach Anspruch 1, **dadurch gekennzeichnet, dass** die lokale Zeit eines Teilnehmers (100) als globale Zeit für das Bussystem (104) eingesetzt wird und dass die Basiszeit dieser globalen Zeit entspricht.

4. Verfahren nach Anspruch 1, **dadurch gekennzeichnet, dass** im Bussystem (104) Nachrichten derart übertragen werden, dass eine Referenznachricht eines Teilnehmers (100) in einem vorgebbaren zeitlichen Abstand als Zykluszeit übertragen wird und der zeitliche Abstand in Zeitfenster vorgebbarer Länge unterteilt wird, in welchen die Nachrichten übertragen werden, wobei die Basiszeit der Zykluszeit entspricht.

5. Verfahren nach Anspruch 1, **dadurch gekennzeichnet, dass** mehrere Zeitwerte in einem oder mehreren Speichern (103, 108, 117) abgelegt werden, wobei jeder Zeitwert mit wenigstens einer Basiszeit verglichen wird, wodurch mehrere Programmunterbrechungen nacheinander oder gleichzeitig ausgelöst werden können.

6. Verfahren nach Anspruch 1, **dadurch gekennzeichnet, dass** der Zeitgeber der die Basiszeit zum Vergleich mit dem wenigstens einen Zeitwert für das Bussystem fest vorgegeben oder veränderbar, insbesondere vorgebbar aus mehreren verschiedenen Zeitgebern der Basiszeite, ist.

7. Verfahren nach Anspruch 1, **dadurch gekennzeichnet, dass** zur Anzeige der Programmunterbrechung ein allgemeines Interruptsignal des Bussystems erzeugt wird.

8. Verfahren nach Anspruch 1, **dadurch gekennzeichnet, dass** zur Anzeige der Programmunterbrechung ein spezielles Interruptsignal im Bussystem erzeugt wird, durch welches eine Unterscheidung zwischen zeitgesteuerter und nicht zeitgesteuerter, insbesondere ereignisgesteuerter, Programmunterbrechung ermöglicht wird.

9. Vorrichtung, insbesondere ein integrierter Schaltkreis, zur Erzeugung wenigstens einer Programmunterbrechung in wenigstens einem Teilnehmer (105) eines Bussystems (104), wobei wenigstens ein Speicher (103) und erste Mittel enthalten sind, durch welche ein vorgebbarer Zeitwert in den wenigstens einen Speicher (103) abgelegt wird, wobei zweite Mittel enthalten sind, die den Zeitwert mit wenigstens einer fortlaufenden Basiszeit vergleichen und bei Erreichen des Zeitwerts durch die fortlaufende Basiszeit die wenigstens eine Programmunterbrechung auslösen, **dadurch gekennzeichnet, dass** die Vorrichtung derart ausgebildet ist, dass diese ein Verfahren nach einem der Ansprüche 1 bis 8 ausführt.

10. Bussystem mit wenigstens zwei Teilnehmern und Mitteln zur Erzeugung wenigstens einer Programmunterbrechung bei wenigstens einem Teilnehmer (105) des Bussystems (104), wobei wenigstens ein Speicher (103) und erste Mittel enthalten sind, durch welche ein vorgebbarer Zeitwert in den wenigstens einen Speicher abgelegt wird, wobei zweite Mittel enthalten sind, die den Zeitwert mit wenigstens einer fortlaufenden Basiszeit vergleichen und bei Erreichen des Zeitwerts durch die fortlaufende Basiszeit die wenigstens eine Programmunterbrechung auslösen, **dadurch gekennzeichnet, dass** das Bussystem derart ausgebildet ist, dass ein Verfahren nach einem der Ansprüche 1 bis 8 ausgeführt wird.

## Claims

1. Method for producing at least one program interruption in at least one user (105) of a bus system (104), wherein at least one user (105) stores a predefinable time value in at least one memory (108), wherein the time value is compared with at least one continuous base time, and the at least one program interruption is triggered when the continuous base time reaches the time value, **characterized in that** the continuous base time is a time which is present in the entire bus system (104) for all the users (100, 105), so that the time value determines a defined program interruption time.

2. Method according to Claim 1, **characterized in that** the bus system (104) is a TTCAN system.

3. Method according to Claim 1, **characterized in that** the local time of a user (100) is used as the global time for the bus system (104), and **in that** the base time corresponds to this global time.

4. Method according to Claim 1, **characterized in that** messages are transmitted in the bus system (104) in such a way that a reference message of a user (100) is transmitted as a cycle time at a predefinable time interval, and the time interval is divided into time windows of predefinable length in which the messages are transmitted, wherein the base time corresponds to the cycle time.

5. Method according to Claim 1, **characterized in that** a plurality of time values are stored in one or more memories (103, 108, 117), wherein each time value is compared with at least one base time, as a result of which a plurality of program interruptions can be triggered successively or simultaneously.

6. Method according to Claim 1, **characterized in that** the timer of the base time for comparison with the at least one time value for the bus system is permanently predefined or can be variable, in particular can be predefined from a plurality of different timers of the base times.

7. Method according to Claim 1, **characterized in that** a general interrupt signal of the bus system is generated in order to display the program interruption.

8. Method according to Claim 1, **characterized in that** a special interrupt signal is generated in the bus system in order to display the program interruption, by means of which special interrupt signal a differentiation between a timed and a non-timed, in particular event-controlled, program interruption is made possible.

9. Device, in particular an integrated circuit, for generating at least one program interruption in at least one user (105) of a bus system (104), wherein at least one memory (103) and first means are provided which store a predefinable time value in the at least one memory (103), wherein second means are provided which compare the time value with at least one continuous base time, and which trigger the at least one program interruption when the continuous base time reaches the time value, **characterized in that** the device is embodied in such a way that it carries out a method according to one of Claims 1 to 8.

10. Bus system having at least two users and means for generating at least one program interruption at at least one user (105) of the bus system (104), wherein at least one memory (103) and first means are provided which store a predefinable time value in the at least one memory, wherein second means are provided which compare the time value with at least one continuous base time and trigger the at least one program interruption when the continuous base time reaches the time value, **characterized in that** the bus system is embodied in such a way that a method according to one of Claims 1 to 8 is carried out.

## Revendications

1. Procédé pour générer au moins une interruption de programme chez au moins d'un utilisateur (105) d'un système de bus (1404) selon lequel au moins un utilisateur (105) dépose une valeur de temps prédéfinie dans au moins une mémoire (108),
la valeur de temps étant comparée à au moins une base de temps continue et lorsqu'on atteint la valeur de temps par la base de temps continue, on déclenche au moins une interruption de programme,
**caractérisé en ce que**
la base de temps continu est un temps existant dans le système global de bus (104) pour tous les utilisateurs (100, 105) de façon que la valeur de temps définisse un instant fixe d'interruption de programme.

2. Procédé selon la revendication 1,
**caractérisé en ce que**
le système de bus (104) est un système TTCAN.

3. Procédé selon la revendication 1,
**caractérisé en ce que**
le temps local d'un utilisateur (100) est utilisé comme temps global pour le système de bus (104) et la base de temps correspond à ce temps global.

4. Procédé selon la revendication 1,
**caractérisé en ce que**
dans le système de bus (104) on transmet des messages,
on transmet un message de référence d'un utlisateur (100) dans un intervalle de temps prédéfini comme durée de cycle et on subdivise l'intervalle de temps en des fenêtres de temps de longueur prédéfinie dans lesquelles on transmet les messages, la base de temps correspondant à la durée du cycle.

5. Procédé selon la revendication 1,
**caractérisé en ce qu'**
on dépose plusieurs valeurs de temps dans une ou plusieurs mémoires (103, 108, 117) et on compare chaque valeur de temps à au moins une base de temps, si bien que plusieurs interruptions de programme pourront être déclenchées successivement ou simultanément.

6. Procédé selon la revendication 1,
**caractérisé en ce que**
l'horloge de la base de temps est prédéfinie de manière fixe ou variable par comparaison avec au moins une valeur de temps pour le système de bus, et elle est notamment prédéfinie à partir de plusieurs horloges différentes pour les bases de temps.

7. Procédé selon la revendication 1,
**caractérisé en ce que**
pour afficher l'interruption de programme on génère un signal d'interruption générale du système de bus.

8. Procédé selon la revendication 1,
**caractérisé en ce que**
pour afficher l'interruption de programme on génère un signal d'interruption spéciale dans le système de bus par lequel on permet de distinguer entre une interruption de programme commandée en fonction du temps et une interruption de programme non commandée en fonction du temps, notamment commandée par un événement.

9. Dispositif, notamment circuit intégré pour générer au moins une interruption de programme dans au moins un utilisateur (105) d'un système de bus (104),
au moins une mémoire (103) et des premiers moyens étant prévus par lesquels une valeur de temps prédéfinie est déposée dans au moins une mémoire (103),
au moins des seconds moyens sont prévus qui comparent la valeur de temps à au moins une base de temps, continue, et lorsque la base de temps, continue atteint la valeur de temps, on déclenche au moins une interruption de programme,
**caractérisé en ce que**
le dispositif est réalisé pour exécuter un procédé selon l'une des revendications 1 à 8.

10. Système de bus comportant au moins deux participants et des moyens pour générer au moins une interruption de programme chez au moins un utilisateur (105) du système de bus (104),
selon lequel au moins une mémoire (103) et des premiers moyens sont prévus par lesquels une durée prédéfinie est déposée dans au moins une mémoire,
des seconds moyens sont prévus pour comparer la valeur de temps à au moins une base de temps continue et lorsque la base de temps continue atteint la valeur de temps on déclenche au moins une interruption de programme,
**caractérisé en ce que**
le système de bus est réalisé pour exécuter un procédé selon l'une des revendications 1 à 8.
